# EUROPÄISCHE PATENTSCHRIFT

(11) **EP 1 466 845 B1**
(45) Veröffentlichungstag und Bekanntmachung des Hinweises auf die Patenterteilung: **19.07.2006**
(21) Anmeldenummer: 04007978.2
(22) Anmeldetag: 01.04.2004
(51) Int. Cl.: B65D 85/57

(54) **Postkartenartige Hülle zum Versenden von plattenartigen Datenspeicherelementen wie CD's oder DVD's**
Postcard-like wrapping for sending of disc storage elements such as CD's or DVD's
Pochette en forme de carte postale pour l'envoi de disques de stockage tels des CD ou des DVD

(30) Priorität: 10.04.2003 DE 20305834 U
(43) Veröffentlichungstag der Anmeldung: 13.10.2004
(73) Patentinhaber: Mühlbacher, Norbert, 5020 Salzburg (AT)
(72) Erfinder: Mühlbacher, Norbert, 5020 Salzburg (AT)
(74) Vertreter: Bauer, Friedrich

(56) Entgegenhaltungen:
- DE-A- 10 110 252
- DE-A- 19 731 648
- DE-U- 29 509 553
- US-A1- 2004 026 489
- US-B1- 6 230 964

## Beschreibung

Die Erfindung betrifft eine postkartenartige Hülle, insbesondere aus Papier oder Karton, zum Versenden von plattenartigen Datenspeicherelementen wie CD's (Kompaktdisks) oder DVD's gemäß dem Oberbegriff des Anspruches 1.

Bekannte Hüllen dieser Art haben den Nachteil, dass sie oft nicht zerstörungsfrei zu öffnen sind und sich somit nach dem Öffnen nicht mehr zum Aufbewahren von CD's eignen. Weiterhin werden zum Herstellen bekannter Hüllen die CD's selbst ebenfalls benötigt, so dass die versandfertige Herstellung der bekannten Hüllen allein nicht möglich ist. Derartige Hüllen eignen sich somit nicht zum Versenden von separat gekauften CD's. Ein weiterer Nachteil bei bekannten CD-Hüllen ist, dass es konstruktionsbedingt nicht möglich ist, die CD an den äußersten, dem Frankierbereich der Karte gegenüberliegenden Rand zu setzen, oder dass es ohne einen separaten CD-Halter nicht möglich ist, die CD in diesem Bereich zu fixieren. Separate CD-Halter innerhalb der Hülle sind jedoch aufwendig herzustellen. Darüber hinaus wird die Karte dicker und kann nicht nachträglich mit herkömmlichen Tintenstrahldruckern beschriftet werden. Wird dagegen der CD-Halter erst nach dem Bedrucken aufgebracht, ist die Karte selbst nicht mehr versandfertig lieferbar.

Aus der DE 197 31 648 A1 ist eine Hülle gemäß dem Oberbegriff des Anspruches 1 bekannt. Der über den jeweils kurzen Rand des Kantenbasisabschnitts zurückgeschlagene Taschen- und Verschlussabschnitt werden miteinander verbunden, insbesondere verklebt, worauf eine bodenseitige Längslasche außenseitig über den Taschen- und Verschlussabschnitt zurückgeschlagen und mit diesen verklebt wird. Hierdurch wird eine Tasche zum Einstecken eines Datenträgers geschaffen, wobei der Datenträger von der oberen Längsseite der Hülle her in die Tasche eingesteckt werden kann.

Aus der DE 101 10 -252 A1 ist eine Hülle bekannt, bei der sich an den ersten langen Rand des Kartenbasisabschnitts ein zurückfaltbarer Taschenabschnitt und an den gegenüberliegenden langen Rand des Kartenbasisabschnitts ein auf den umgefalteten Taschenabschnitt zurückfaltbarer Verschlussabschnitt anschließen. Im Taschenabschnitt sind Schlitze vorgesehen, in welche flache Datenträger eingesteckt werden können.

Der Erfindung liegt die Aufgabe zugrunde, eine postkartenartige Hülle der eingangs genannten Art zu schaffen, die auf besonders einfache und kostengünstige Weise sowie unabhängig vom Datenspeicherelement herstellbar ist, nach außen die Form einer Postkarte hat, das Versenden des Datenspeicherelementes auf einfache und beschädigungsfreie Weise sicherstellt und zerstörungsfrei zu öffnen ist.

Diese Aufgabe wird erfindungsgemäß durch die Merkmale des Anspruches 1 gelöst. Vorteilhafte Ausführungsformen der Erfindung sind in den weiteren Ansprüchen beschrieben.

Bei der erfindungsgemäßen Hülle ist der Taschenabschnitt auf die nach innen umgefalteten Längslaschen zurückfaltbar. Weiterhin weist der Verschlussabschnitt außenseitig das Frankierfeld und ein beschreibbares Adressfeld auf. Das freie Ende des Verschlussabschnitts ist mittels einer lösbaren Verbindungseinrichtung mit dem Taschenabschnitt verbindbar. Ferner ist am freien Ende des Taschenabschnitts eine Rückhaltelasche vorgesehen, die nach innen in die Tasche einschlagbar ist, um ein Herausgleiten des Datenspeicherelementes aus der Tasche zu verhindern.

Bei der erfindungsgemäßen Hülle ist die Tasche zum Einstecken des Datenspeicherelementes so gestaltet, dass das Datenspeicherelement immer außerhalb des Frankierfeldes liegt, so dass es durch das Abstempeln der als Postkarte verschickbaren Hülle nicht beschädigt wird. Weiterhin ist die erfindungsgemäße Hülle auf sehr einfache und kostengünstige Weise herstellbar. Von besonderem Vorteil ist auch, dass sie nach dem Öffnen wiederverwendet werden kann, beispielsweise als Archivierungsmittel, das in einem Ordner abgeheftet werden kann. Da die Hülle eine längliche, rechteckförmige Form hat, wie diese für Postkarten üblich ist, andererseits sich die Tasche nicht über die gesamte Länge der Hülle erstreckt, verfügt die Hülle somit immer über einen Rand, der nicht vom Datenspeicherelement besetzt ist und ohne weiteres zum Abheften der Hülle gelocht werden kann. Aufgrund der zerstörungsfreien Öffnungsmöglichkeit eignet sich die Hülle auch für eine wiederholte Benutzung. Die nach innen einschlagbare Rückhaltelasche ist auf sehr einfache und kostengünstige Weise herstellbar und erfüllt dennoch in vollem Umfang ihren Zweck, das Datenspeicherelement innerhalb der Tasche zu halten. Ein besonderer Vorteil ist weiterhin, dass die fertige Hülle ohne weiteres nachträglich bedruckt oder mit einem Drucker, insbesondere Tintenstrahldrucker nachträglich beschrieben werden kann. Ein weiterer Vorteil ist, dass derjenige Abschnitt der Hülle, der über den Taschenabschnitt vorsteht, ohne weiteres weggeschnitten werden kann, wodurch eine an die Größe des Datenspeicherelements angepasste Aufbewahrungstasche geschaffen wird. Hierzu kann zweckmäßigerweise beispielsweise auf der Innenseite der Hülle an der entsprechenden Schnittstelle ein Scherensymbol mit angedeuteter Schnittlinie aufgedruckt sein. Weiterhin ist es auch möglich, dass die Hülle längs dieser Schnittlinie eine vorgefertigte Perforation aufweist.

Gemäß einer vorteilhaften Ausführungsform hat der Taschenabschnitt eine Länge, welche den Durchmesser eines Datenspeicherelements um maximal 20 % übersteigt. Dies bedeutet mit anderen Worten, dass die Länge der Tasche in etwa dem Durchmesser des Datenspeicherelements entspricht oder nur geringfügig größer ist. Hierdurch wird auf einfache Weise sichergestellt, dass sich das Datenspeicherelement immer außerhalb des Frankierbereichs und auch zumindest größtenteils außerhalb des Adressbereiches befindet. Zweckmäßigerweise ist die Tasche zumindest im Wesentlichen quadratisch.

Vorteilhafterweise ist der Taschenabschnitt auf seiner Außenseite zum Beschreiben ausgebildet. Hierdurch ist es möglich, die Hülle wie eine Postkarte auf dem Feld, das sich neben dem Adressfeld befindet, zu beschreiben, während die andere Seite, d.h. die sichtbare Seite des Hüllenbasisabschnitts, in beliebiger Weise bedruckt sein kann. Altenativ zum Bedrucken ist es selbstverständlich auch möglich, diese Seite unbedruckt zu lassen, so dass auch diese Seite zum Beschreiben zur Verfügung steht.

Gemäß einer besonders vorteilhaften Ausführungsform besteht die lösbare Verbindungseinrichtung aus einer am freien Ende des Verschlussabschnitts angeordneten Stecklasche und einem im Taschenabschnitt vorgesehenen Schlitz, in den die Stecklasche einsteckbar ist. Eine derartige Verbindungseinrichtung ist auf besonders einfache Weise herzustellen und ermöglicht auch auf besonderes einfache und schnelle Weise das Verschließen und Öffnen der Hülle.

Alternativ hierzu ist es auch möglich, dass die lösbare Verbindungseinrichtung aus einem nicht permanenten Klebemittel besteht, mit dem das freie Ende des Verschlussabschnittes auf dem Taschenabschnitt fixierbar ist.

Vorteilhafter Weise erstreckt sich der außen sichtbare Bereich des Verschlussabschnitts bis zur Mitte der Karte. Da der Verschlussabschnitt das Adressfeld trägt, entspricht auf diese Weise die Anordnung des Adressfeldes einerseits und des daneben liegenden Textfeldes andererseits denjenigen einer üblichen Postkarte.

Gemäß einer besonders vorteilhaften Ausführungsform bestehen sämtliche Teile der Hülle aus einem zusammenhängenden Papier- oder Kartonzuschnitt.

Der Taschenabschnitt kann auf die nach innen umgefalteten Längslaschen aufgeklebt sein. Dies bietet sich insbesondere dann an, wenn die Breite der Längslaschen relativ klein gehalten werden soll.

Alternativ hierzu ist es jedoch auch möglich, dass der Taschenabschnitt im zurückgefalteten Zustand lose auf den nach innen umgefalteten Längslaschen aufliegt, wobei die Rückhaltelasche als Haltemittel für den Taschenabschnitt ausgebildet ist, das nach dem Einschlagen in die Tasche ein Abheben des Taschenabschnitts von den Längslaschen verhindert. Diese Ausführungsform bietet den Vorteil, dass eine derart gestaltete Hülle vollkommen ohne Klebung auskommt, wodurch die Herstellung einfacher und kostengünstiger sein kann.

Bevorzugt beträgt die Breite der Längslaschen 10 bis 50% der Breite der Hülle. Andere Breiten der Längslaschen sind jedoch möglich.

Die Erfindung wird nachfolgend anhand der Zeichnungen beispielhaft näher erläutert. Es zeigen:
- Figur 1:: einen ungefalteten Kartonzuschnitt, aus dem die erfindungsgemäße Hülle gefertigt wird,
- Figur 2:: eine leicht gefaltete Ansicht des Kartonzuschnitts von Figur 1 von der Karteninnenseite her,
- Figur 3:: Die Hülle nach dem Aufkleben des Taschenabschnitts auf den seitlichen Längslaschen,
- Figur 4:: eine Darstellung zur Verdeutlichung des Einschiebens eines Datenspeicherelements in Form einer CD in die Tasche,
- Figur 5:: die Hülle nach dem Einschieben der CD und dem Einschlagen der Rückhaltelasche,
- Figur 6:: Die Hülle während des Umklappens des Verschlussabschnitts,
- Figur 7:: die versandfertige, geschlossene Hülle,
- Figur 8:: eine der Figur 6 entsprechende Darstellung einer zweiten Ausführungsform der erfindungsgemäßen Hülle,
- Figur 9:: eine der Figur 6 entsprechende Darstellung einer dritten Ausführungsform der erfindungsgemäßen Hülle, und
- Figur 10:: eine der Figur 2 entsprechende Darstellung einer vierten Ausführungsform der erfindungsgemäßen Hülle mit eingelegter CD.

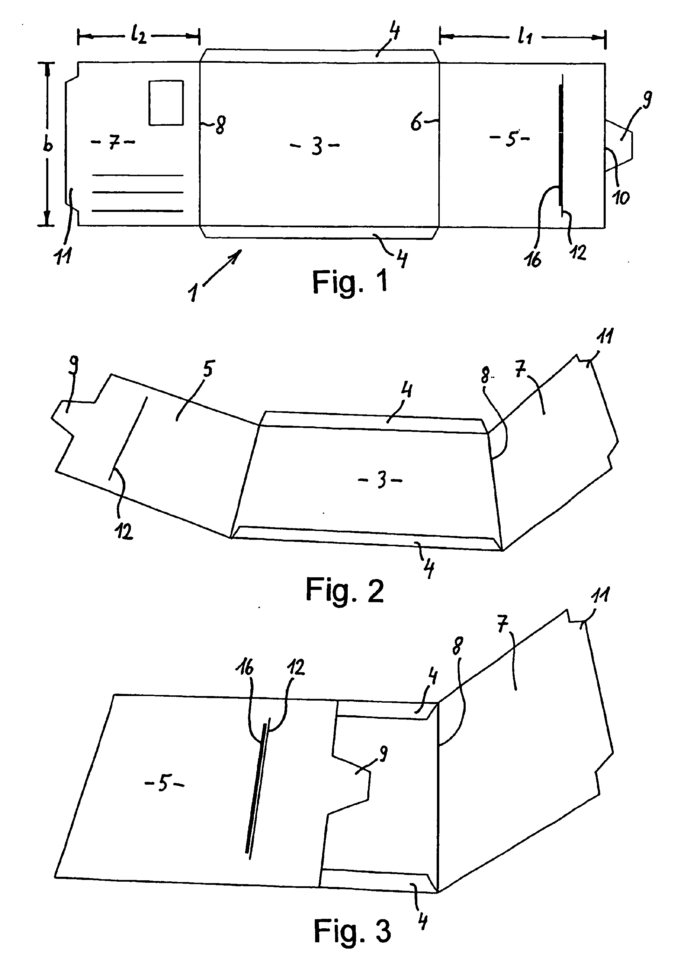

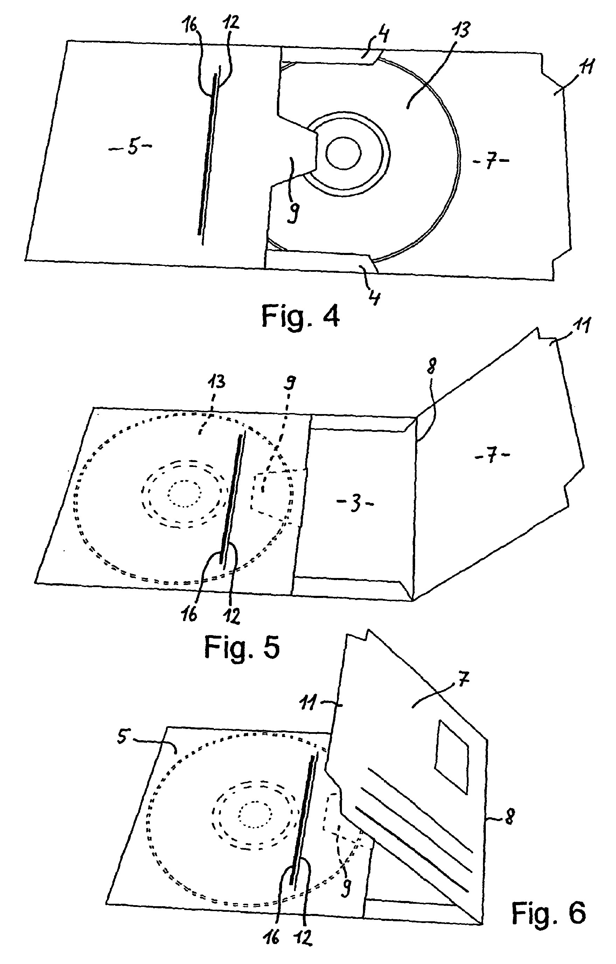

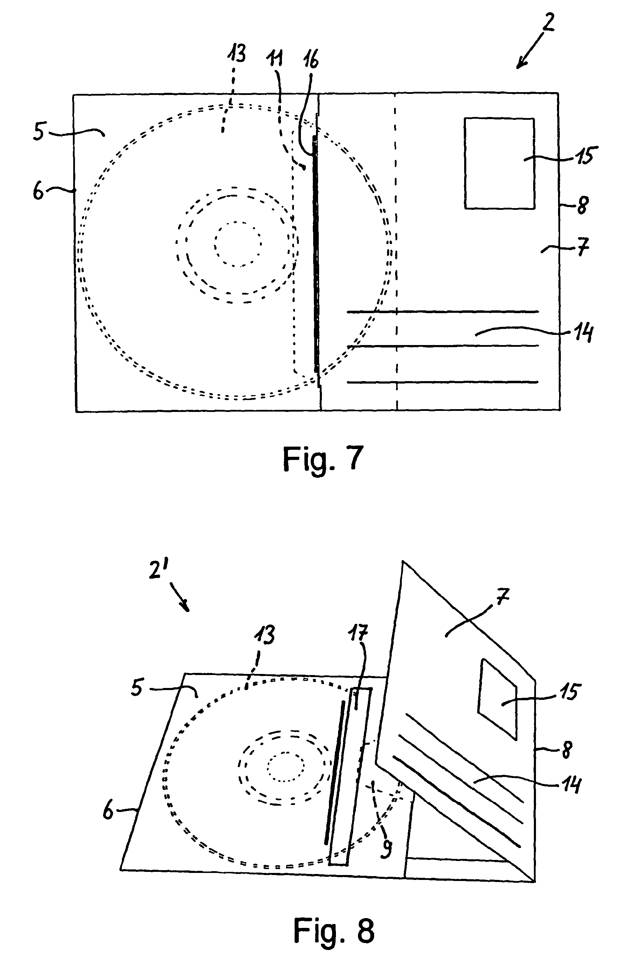

Aus Figur 1 ist ein ebener, zusammenhängender Kartonzuschnitt 1 ersichtlich, aus dem eine in den Figuren 6 und 7 dargestellte, fertige Hülle 2 gefertigt werden kann, die zum Versenden eines plattenförmigen Datenspeicherelements, beispielsweise einer CD 13 oder DVD, dient. Der Kartonzuschnitt 1 und damit auch die Hülle 2 besteht aus einem rechteckigen, die Größe einer Postkarte aufweisenden Kartenbasisabschnitt 3, der an seinen langen Rändern nach innen umfaltbare Längslaschen 4 aufweist, einem ebenen Taschenabschnitt 5, der sich am kurzen Rand 6 an den Kartenbasisabschnitt 3 anschließt, sowie einem Verschlussabschnitt 7, der sich am gegenüberliegenden kurzen Rand 8 an den Kartenbasisabschnitt 3 anschließt.

Die Breite b des Kartenbasisabschnitts 3, des Taschenabschnitts 5 und des Verschlussabschnitts 7 sind gleich. Die Länge 11 des Taschenabschnitts 5 ist im wesentlichen gleich seiner Breite b, so dass der Taschenabschnitt 5 im wesentlichen quadratisch ist. Alternativ kann der Taschenabschnitt jedoch auch ohne weiteres länger als breit oder breiter als lang sein. Die Länge 12 des Verschlussabschnitts 7 beträgt im dargestellten Ausführungsbeispiel etwa die Hälfte der Länge des Kartenbasisabschnitts 3.

Sowohl der Taschenabschnitt 5 als auch der Verschlussabschnitt 7 sind durch einen Falz vom Kartenbasisabschnitt 3 abgesetzt, der mit den Rändern 6 bzw. 7 zusammenfällt.

Der Taschenabschnitt 5 trägt an seinem freien Ende eine Rückhaltelasche 9, die über einen Falz 10 mit dem übrigen Taschenabschnitt 5 verbunden ist und längs des Falzes 10 umgeschlagen werden kann. Der Verschlussabschnitt 7 trägt an seinem freien Ende eine vorspringende Stecklasche 11, die jedoch nicht durch einen Falz abgetrennt ist, da diese Stecklasche 11 im späteren Gebrauch nicht umgeknickt werden soll. Die Stecklasche 11 wird beim Verschließen der Hülle 2, wie aus den Figuren 6 und 7 erkennbar, in einen querverlaufenden Schlitz 12 eingesteckt, der sich im Taschenabschnitt 5 befindet.

Um die Hülle 2 aus dem in Figur 1 dargestellten Kartonzuschnitt 1 herzustellen, werden zunächst, wie aus Figur 2 ersichtlich, die beiden seitlichen Längslaschen 4 nach innen umgeklappt, so dass sie auf dem Hüllenbasisabschnitt 3 zu liegen kommen. Anschließend wird der Taschenabschnitt 5 um den kurzen Rand 8 nach innen geklappt, so dass er auf den Längslaschen 4 zu liegen kommt und mit diesen verklebt werden kann. Dieser Zustand ist in Figur 3 dargestellt. Der Taschenabschnitt 5 bildet somit zusammen mit dem gegenüberliegenden Bereich des Kartenbasisabschnitts 3 eine Tasche, in welche die CD 13 (Figur 4) eingesteckt werden kann. Hierbei wird die CD 13 zunächst zwischen die Längslaschen 4 eingeführt, da sich diese über die gesamte Länge des Kartenbasisabschnitts 3 erstrecken und somit über den Taschenabschnitt 5 vorragen, der kürzer als der Kartenbasisabschnitt 3 ausgebildet ist. Wird die CD 13 ganz in die Tasche eingeschoben, wird die CD 13 jedoch vollständig vom Taschenabschnitt 5 überdeckt.

Anschließend kann, wie aus Figur 5 ersichtlich, die Rückhaltelasche 9 in das Innere der Tasche umgeschlagen werden, wobei die Lasche 9 unter die CD 13 geschoben wird. Die CD 13 befindet sich damit zwischen dem Taschenabschnitt 5 und der Rückhaltelasche 9.

Anschließend kann, wie aus den Figuren 6 und 7 ersichtlich, der Verschlussabschnitt 7 um den Rand 8 herum zurückgefaltet werden, bis er auf dem Kartenbasisabschnitt 3 bzw. teilweise auf dem Taschenabschnitt 5 aufliegt und die Stecklasche 11 in den Schlitz 12 eingesteckt werden kann.

Der Verschlussabschnitt 7 weist, wie insbesondere aus den Figuren 6 und 7 ersichtlich, auf seiner Außenseite ein Adressfeld 14 und ein darüber angeordnetes Frankierfeld 15 auf. Adressfeld 14 und Frankierfeld 15 befinden sich dabei an den für Postkarten üblichen Stellen. Wie aus Figur 7 erkennbar, befindet sich das Frankierfeld 15 seitlich außerhalb der Tasche, in welche die CD 13 eingesteckt werden kann, und damit deutlich neben dem Bereich, der von der CD 13 besetzt wird. Auch wenn zwei Briefmarken nebeneinander auf das Frankierfeld 15 geklebt werden, befinden sich die Briefmarken somit in der Regel neben der CD 13. Die CD 13 liegt damit neben dem Bereich, der üblicherweise gestempelt wird, so dass sie beim Stempeln nicht beschädigt werden kann.

Weiterhin kann der Verschlussabschnitt 7 auf seiner Innenseite ebenfalls zum Beschreiben ausgebildet sein.

Der Taschenabschnitt 5 trägt auf seiner Außenseite in unmittelbarer Nachbarschaft zum Schlitz 12 und parallel zu diesem einen quer verlaufenden Markierungsstrich 16, der im vorliegenden Ausführungsbeispiel fast die gleiche Länge wie der Schlitz 12 hat und sich in etwa in der Mitte der Postkarte befindet. Der Markierungsstrich 16, der bei geschlossenem Verschlussabschnitt 7 noch sichtbar ist, erleichtert zum einen das Auffinden des Schlitzes 12 zum Einstecken der Stecklasche 11 und trennt zum anderen auch optisch das Adressfeld 14 des Verschlussabschnitts 7 vom sichtbaren Bereich des Taschenabschnitts 5, der als beschreibbares Textfeld ausgebildet sein kann. Weiterhin ist es möglich, die gegenüberliegende Seite der Hülle 2, d. h. die nach außen sichtbare Seite des Kartenbasisabschnitts 3, entweder als beschreibbare Fläche oder in der Form einer Ansichtskarte zu gestalten, d. h. entsprechend zu bedrucken oder zu beschichten.

Aus Figur 8 ist eine alternative Ausführungsform einer Hülle 2' ersichtlich. Diese Ausführungsform unterscheidet sich von der vorstehend beschriebenen Ausführungsform lediglich dadurch, dass der Verschlussabschnitt 7 keine Stecklasche 11 zum Einstecken in einen Schlitz 12 des Taschenabschnitts 5 aufweist, sondern dass anstelle des Schlitzes 12 ein nicht permanentes Klebemittel 17 in der Form eines quer verlaufenden Klebestreifens über die überwiegende Breite des Taschenabschnitts 5 vorgesehen ist. Wie ersichtlich, befindet sich das Klebemittel 17 in unmittelbarer Nachbarschaft zum Markierungsstrich 16, so dass das freie Ende des Verschlussabschnittes 7 auf das Klebemittel 17 aufgelegt und auf lösbare Weise mit dem Taschenabschnitt 5 verbunden werden kann.

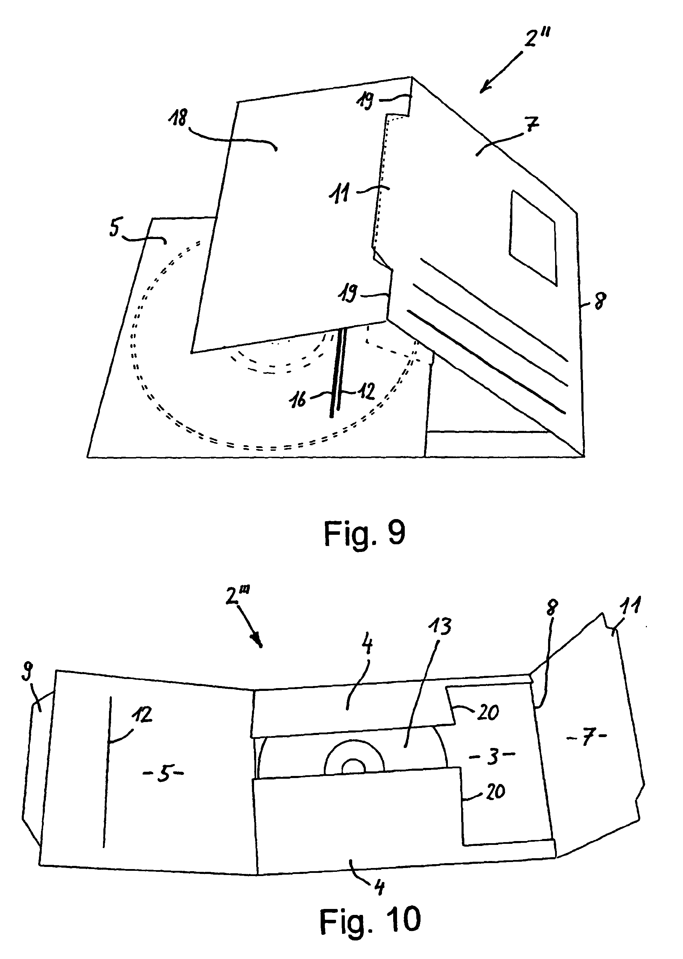

Aus Figur 9 ist ein weiteres Ausführungsbeispiel einer erfindungsgemäßen Hülle 2" ersichtlich, bei dem am freien Ende des Verschlussabschnittes 7, d.h. an demjenigen Ende, an dem sich die Stecklasche 11 befindet, ein Einschlagabschnitt 18 anschließt, der maximal die Länge des Verschlussabschnittes 7 hat und nach innen umgefaltet werden kann, so dass er vollkommen unterhalb des Verschlussabschnittes 7 zu liegen kommt. Der Einschlagabschnitt 18 stellt zusätzlichen Platz zur Verfügung, der auf seiner Vorder- und/oder Rückseite beschrieben werden kann.

Wie ersichtlich, ist auch der Einschlagabschnitt 18 Teil eines einstückigen Zuschnitts, wobei die Stecklasche 11 durch eine stufenförmige Stanzlinie freigeschnitten wird und der Einschlagabschnitt 18 lediglich über zwei randseitige Falze 19 mit dem Verschlussabschnitt 7 verbunden ist, die sich beidseitig von der Stecklasche 11 nach außen erstrecken.

Es ist ohne weiteres möglich, die in Figur 9 gezeigte Ausführungsform ohne Stecklasche 11 und ohne Schlitz 12 auszuführen und statt dessen, wie dies beim Ausführungsbeispiel gemäß Figur 8 der Fall ist, ein Klebemittel 17 vorzusehen, mit dem dann der Einschlagabschnitt 18 auf dem Taschenabschnitt 5 in lösbare Weise verklebt wird.

Weiterhin ist es auch möglich, den Einschlagabschnitt 18 mehrfach gefaltet auszuführen, um hierdurch den zum Beschreiben verfügbaren Platz zu vervielfältigen.

Aus Figur 10 ist ein viertes Ausführungsbeispiel einer erfindungsgemäßen Hülle 2"' ersichtlich, die im Wesentlichen dem ersten Ausführungsbeispiel der Figuren 1 bis 7 ähnelt. Bei der Hülle 2"' sind jedoch die Seitenlaschen 4 über etwa 2/3 ihrer Länge in dem dem Taschenabschnitt 5 benachbarten Bereich wesentlich breiter als beim ersten Ausführungsbeispiel ausgebildet, wobei ihre Breite etwa 50 % der Breite des Kartenbasisabschnitts 3 beträgt. Im nach innen geschlagenen, zusammengefalteten Zustand sind somit die inneren Ränder des verbreiterten Abschnitts der Längslaschen 4 in unmittelbarer Nachbarschaft angeordnet. Der übrige Bereich der Längslaschen 4 ist dagegen wesentlich weniger breit ausgebildet, so dass die Breite der Längslaschen 4 in diesem übrigen Bereich derjenigen des ersten Ausführungsbeispiels entspricht.

Weiterhin ist bei dem Ausführungsbeispiel gemäß Figur 10 die Rückhaltelasche 9 breiter ausgebildet als beim ersten Ausführungsbeispiel, so dass sich die Rückhaltelasche 9 über den überwiegenden Teil der Breite des Taschenabschnitts 5 erstreckt.

Bei diesem Ausführungsbeispiel ist es jedoch nicht erforderlich, dass der Taschenabschnitt 5 auf die Längslasche 4 aufgeklebt wird. Vielmehr genügt es, wenn der Taschenabschnitt 5 nach dem Einlegen der CD 13 auf die nach innen zurückgeschlagenen Längslaschen 4 zurückgefaltet wird, so dass die Rückhaltelasche 9 um die Ränder 20 der Längslaschen 4 herum nach innen eingeschlagen werden kann. Hierbei kann die Rückhaltelasche 9 die CD 13 untergreifen. Ein unbeabsichtigtes Aufklappen des Taschenabschnitts 5 ist hierdurch nicht mehr möglich. Anschließend kann der Verschlussabschnitt 7 in gleicher Weise wie beim ersten Ausführungsbeispiel auf einen Teilbereich des Taschenabschnitts 5 zurückgeklappt und die Stecklasche 11 in den Schlitz 12 eingesteckt werden.

Die Ausführungsform gemäß Figur 10 bietet den Vorteil, dass der Taschenabschnitt 5 nicht mehr auf die Längslaschen 4 aufgeklebt werden muss, was eine einfachere und kostengünstigere Herstellung ermöglicht. Weiterhin bieten die verbreiterten Längslaschen viel zusätzlichen Platz zur Beschriftung.

Auch bei dem Ausführungsbeispiel gemäß Figur 10 ist es ohne Weiteres möglich, den Verschlussabschnitt 7 nicht mittels der Stecklasche 11, sondern mittels eines Klebemittels 16, wie in Figur 8 dargestellt, zu verschließen.

Die Länge des verbreiterten Bereichs der Längslaschen 4 entspricht zweckmäßigerweise der Länge des Taschenabschnitts 5.

Weiterhin ist es bei allen vorstehend beschriebenen Ausführungsbeispielen möglich, den Taschenabschnitt 5 und/oder den Hüllenbasisabschnitt 3 zumindest in dem Abschnitt, in dem die CD 13 zu liegen kommt, aus einem transparenten Material zu bilden, damit die CD durch die postkartenartige Hülle hindurch sichtbar ist.

## Patentansprüche

1. Postkartenartige Hülle, insbesondere aus Papier oder Karton, zum Versenden von plattenförmigen Datenspeicherelementen wie CD' s (13) oder DVD' s, mit einem rechteckigen, die Größe einer Postkarte aufweisenden Kartenbasisabschnitt (3), der an seinen langen Rändern nach innen umfaltbare Längslaschen (4) aufweist, mit einem sich an einem ersten kurzen Rand (6) des Kartenbasisabschnitts (3) anschließenden Taschenabschnitt (5), der derart zurückfaltbar ist, dass eine Tasche zum Einschieben des Datenspeicherelementes gebildet wird, wobei sich der durch das Datenspeicherelement besetzbare Teil der Tasche seitlich außerhalb des Frankierfeldes (15) befindet, und mit einem sich an den zweiten kurzen Rand (8) des Kartenbasisabschnitts (3) anschließenden, zurückfaltbaren Verschlussabschnitt (7), dessen freies Ende mit dem Taschenabschnitt (5) verbindbar ist, **dadurch gekennzeichnet, dass** der Taschenabschnitt (5) auf die nach innen umgefalteten Längslaschen (4) zurückfaltbar ist,
dass der Verschlussabschnitt (7) außenseitig das Frankierfeld (15) und ein beschreibbares Adressfeld (14) aufweist, dass das freie Ende des Verschlussabschnitts (7) mittels einer lösbaren Verbindungseinrichtung mit dem Taschenabschnitt (5) verbindbar ist,
und dass am freien Ende des Taschenabschnitts (5) eine Rückhaltelasche (9) vorgesehen ist, die nach innen in die Tasche einschlagbar ist, um ein Herausgleiten des Datenspeicherelementes aus der Tasche zu verhindern.

2. Hülle nach Anspruch 1, **dadurch gekennzeichnet, dass** der Taschenabschnitt (5) eine Länge hat, welche den Durchmesser eines Datenspeicherelementes um maximal 20 % übersteigt.

3. Hülle nach Anspruch 1 oder 2, **dadurch gekennzeichnet, dass** die Tasche quadratisch ist.

4. Hülle nach einem der vorhergehenden Ansprüche, **dadurch gekennzeichnet, dass** der Taschenabschnitt (5) auf seiner Außenseite zum Beschreiben ausgebildet ist.

5. Hülle nach einem der vorhergehenden Ansprüche, **dadurch gekennzeichnet, dass** die lösbare Verbindungseinrichtung aus einer am freien Ende des Verschlussabschnitts (7) angeordneten Stecklasche (11) und einem im Taschenabschnitt (5) vorgesehenen Schlitz (12) besteht, in den die Stecklasche (11) einsteckbar ist.

6. Hülle nach einem der Ansprüche 1 bis 4, **dadurch gekennzeichnet, dass** die lösbare Verbindungseinrichtung aus einem nicht permanenten Klebemittel besteht, mit dem das freie Ende des Verschlussabschnitts (7) auf dem Taschenabschnitt (5) fixierbar ist.

7. Hülle nach einem der vorhergehenden Ansprüche, **dadurch gekennzeichnet, dass** sich der nach außen sichtbare Bereich des Verschlussabschnitts (7) bis zur Mitte der Karte - in Längsrichtung der Karte gesehen - erstreckt.

8. Hülle nach einem der vorhergehenden Ansprüche, **dadurch gekennzeichnet, dass** der Verschlussabschnitt (7) auf seiner Außen- und Innenseite zum Beschreiben ausgebildet ist.

9. Hülle nach einem der vorhergehenden Ansprüche, **dadurch gekennzeichnet, dass** sämtliche Teile der Hülle (13) aus einem zusammenhängenden Papier- oder Kartonzuschnitt bestehen.

10. Hülle nach einem der vorhergehenden Ansprüche, **dadurch gekennzeichnet, dass** an den Verschlussabschnitt (7) ein Einschlagabschnitt (18) anschließt, der nach innen umschlagbar ist, so dass er unterhalb des Verschlussabschnittes (7) zu liegen kommt.

11. Hülle nach Anspruch 10, **dadurch gekennzeichnet, dass** der Einschlagabschnitt (18) aus mehreren gefalteten, aufeinanderliegenden Abschnitten besteht.

12. Hülle nach einem der vorhergehenden Ansprüche, **dadurch gekennzeichnet, dass** sich die lösbare Verbindungseinrichtung in der Mitte der Hülle (2, 2', 2"), in deren Längsrichtung gesehen, befindet.

13. Hülle nach einem der vorhergehenden Ansprüche, **dadurch gekennzeichnet, dass** der Verschlussabschnitt (7) vom sichtbaren Bereich des Taschenabschnitts (5) visuell durch eine Markierung getrennt ist.

14. Hülle nach Anspruch 13, **dadurch gekennzeichnet, dass** die Markierung aus einem Markierungsstrich (16) oder einer Schriftzeile besteht.

15. Hülle nach einem der vorhergehenden Ansprüche, **dadurch gekennzeichnet, dass** der Taschenabschnitt (5) auf die nach innen umgefalteten Längslaschen (4) aufgeklebt ist.

16. Hülle nach einem der Ansprüche 1 bis 14, **dadurch gekennzeichnet, dass** der Taschenabschnitt (5) im zurückgefalteten Zustand lose auf den nach innen umgefalteten Längslaschen (4) aufliegt, und dass die Rückhaltelasche (9) als Haltemittel für den Taschenabschnitt (5) ausgebildet ist, das nach dem Einschlagen in die Tasche ein Abheben des Taschenabschnitts (5) von den Längslaschen (4) verhindert.

17. Hülle nach einem der vorhergehenden Ansprüche, **dadurch gekennzeichnet, dass** die Breite jeder Längslasche (4) 10-50% der Breite der Hülle beträgt.

## Claims

1. Postcard-like wrapping, in particular made from paper or cardboard, for sending disc-shaped data storage elements such as CDs (13) or DVDs, comprising a rectangular card base portion (3) the size of a postcard, which has on its long edges inwardly foldable longitudinal tabs (4), comprising a pocket portion (5), which is connected to a first short edge (6) of the card base portion (3) and may be folded back in such a way that a pocket is formed for the insertion of the data storage element, the part of the pocket that may be occupied by the data storage element being located laterally outside the franking field (15), and comprising a closure portion (7), which may be folded back and is connected to the second short edge (8) of the card base portion (3), the free end of said closure portion being connectable to the pocket portion (5), **characterised in that** the pocket portion (5) may be folded back onto the inwardly folded longitudinal tabs (4), **in that** the closure portion (7) comprises on its outside the franking field (15) and an address field (14) which may be written in, **in that** the free end of the closure portion (7) may be connected to the pocket portion (5) using a detachable connecting means, and **in that** a retaining tab (9), which may be folded inward into the pocket to prevent the data storage element from sliding out of the pocket, is provided at the free end of the pocket portion (5).

2. Wrapping according to claim 1, **characterised in that** the pocket portion (5) has a length which exceeds the diameter of a data storage element by a maximum of 20%.

3. Wrapping according to either claim 1 or claim 2, **characterised in that** the pocket is square.

4. Wrapping according to any one of the preceding claims, **characterised in that** the pocket portion (5) is configured on its outside to be written on.

5. Wrapping according to any one of the preceding claims, **characterised in that** the detachable connecting means consists of an insertion tab (11) arranged at the free end of the closure portion (7) and a slot (12), which is provided in the pocket portion (5) and into which the insertion tab (11) may be inserted.

6. Wrapping according to any one of claims 1 to 4, **characterised in that** the detachable connecting means consists of a non-permanent adhesive with which the free end of the closure portion (7) may be fixed to the pocket portion (5).

7. Wrapping according to any one of the preceding claims, **characterised in that** the outwardly visible region of the closure portion (7) extends to the centre of the card, viewed in the longitudinal direction of the card.

8. Wrapping according to any one of the preceding claims, **characterised in that** the closure portion (7) is configured on its outside and inside to be written on.

9. Wrapping according to any one of the preceding claims, **characterised in that** all of the parts of the wrapping (13) consist of an integral paper or cardboard blank.

10. Wrapping according to any one of the preceding claims, **characterised in that** connected to the closure portion (7) is a folding portion (18), which may be folded inwards so that it comes to rest below the closure portion (7).

11. Wrapping according to claim 10, **characterised in that** the folding portion (18) consists of a plurality of folded, superimposed portions.

12. Wrapping according to any one of the preceding claims, **characterised in that** the detachable connecting means is located in the centre of the wrapping (2, 2', 2"), viewed in the longitudinal direction thereof.

13. Wrapping according to any one of the preceding claims, **characterised in that** the closure portion (7) is visually separated from the visible region of the pocket portion (5) by a marking.

14. Wrapping according to claim 13, **characterised in that** the marking consists of a marking line (16) or a writing line.

15. Wrapping according to any one of the preceding claims, **characterised in that** the pocket portion (5) is glued onto the inwardly folded longitudinal tabs (4).

16. Wrapping according to any one of claims 1 to 14, **characterised in that**, in the folded-back state, the pocket portion (5) rests loosely on the inwardly folded longitudinal tabs (4), and **in that** the retaining tab (9) is configured as a means for holding the pocket portion (5), which means prevents the pocket portion (5) from becoming detached from the longitudinal tabs (4) following folding into the pocket.

17. Wrapping according to any one of the preceding claims, **characterised in that** the width of each longitudinal tab (4) is from 10 to 50% the width of the wrapping.

## Revendications

1. Pochette analogue à une carte postale, en particulier en papier ou en carton, pour l'expédition d'éléments supports de données en forme de disque, comme des disques compacts CD (13) ou DVD, comprenant un tronçon de base de carte (3) de forme rectangulaire présentant la taille d'une carte postale qui présente des pattes allongées (4) repliables vers l'intérieur sur les bords de ses grands côtés, comprenant un tronçon formant poche (5) qui se raccorde au bord d'un petit côté (6) du tronçon de base de carte (3) et qui peut être replié de telle manière qu'il se forme une poche pour enfiler l'élément support de données, dans laquelle la partie de la poche qui peut être occupée par l'élément support de données se trouve latéralement à l'extérieur du champ d'affranchissement (15), et comprenant un tronçon de fermeture (7) qui se raccorde au bord du deuxième petit côté (8) du tronçon de base de carte (3) et qui peut être replié, dont l'extrémité libre peut être reliée au tronçon formant poche (5),
**caractérisée en ce que** le tronçon formant poche (5) est repliable sur les pattes allongées (4) repliées vers l'intérieur,
**en ce que** le tronçon de fermeture (7) présente du côté extérieur le champ d'affranchissement (15) et un champ d'adresse inscriptible (14), **en ce que** l'extrémité libre du tronçon de fermeture (7) peut être relié au tronçon formant poche (5) à l'aide d'un moyen de jonction détachable, et
**en ce qu'**il est prévu une patte de retenue (9) à l'extrémité libre du tronçon formant poche (5), patte qui peut être enfilée vers l'intérieur dans la poche afin d'empêcher à l'élément support de données de glisser en sortant hors de la pochette.

2. Pochette selon la revendication 1, **caractérisée en ce que** le tronçon formant poche (5) a une longueur qui dépasse au maximum de 20 % le diamètre d'un élément support de données.

3. Pochette selon la revendication 1 ou 2, **caractérisée en ce que** la pochette est carrée.

4. Pochette selon l'une des revendications précédentes, **caractérisée en ce que** le tronçon formant poche (5) est réalisé de manière à pouvoir recevoir des écritures sur son côté extérieur.

5. Pochette selon l'une des revendications précédentes, **caractérisée en ce que** le moyen de liaison détachable est composé d'une patte enfichable (11) agencée à l'extrémité libre du tronçon de fermeture (7) et d'une fente (12) ménagé dans le tronçon formant poche (5) et dans laquelle peut être enfichée la patte enfichable (11).

6. Pochette selon l'une des revendications 1 à 4, **caractérisée en ce que** le moyen de liaison détachable est composé d'un agent collant non permanent, au moyen duquel l'extrémité libre du tronçon de fermeture (7) peut être fixé sur le tronçon formant poche (5).

7. Pochette selon l'une des revendications précédentes, **caractérisée en ce que** la région, visible vers l'extérieur, du tronçon de fermeture (7) s'étend jusqu'au milieu de la carte, vue en direction longitudinale de la carte.

8. Pochette selon l'une des revendications précédentes, **caractérisée en ce que** le tronçon de fermeture (7) est réalisé de manière à pouvoir recevoir des écritures sur son côté extérieur et sur son côté intérieur.

9. Pochette selon l'une des revendications précédentes, **caractérisée en ce que** de la pochette (13) est formée à partir d'un flan de papier ou de carton d'un seul tenant.

10. Pochette selon l'une des revendications précédentes, **caractérisée en ce que**, au tronçon de fermeture (7) fait suite un tronçon de rabattement (18) qui peut être rabattu vers l'intérieur de manière à venir se trouver au-dessous du tronçon de fermeture (7).

11. Pochette selon la revendication 10, **caractérisée en ce que** le tronçon de rabattement (18) est formé de plusieurs tronçons repliés posés les uns sur les autres.

12. Pochette selon l'une des revendications précédentes, **caractérisée en ce que** le moyen de liaison détachable se trouve au milieu de la pochette (2, 2', 2"), vue dans sa direction longitudinale.

13. Pochette selon l'une des revendications précédentes, **caractérisée en ce que** le tronçon de fermeture (7) est séparé visuellement par un marquage vis-à-vis de la région visible du tronçon formant poche (5).

14. Pochette selon la revendication 13, **caractérisée en ce que** le marquage est un trait de marquage (16) ou une ligne écrite.

15. Pochette selon l'une des revendications précédentes, **caractérisée en ce que** le tronçon formant poche (5) est collé les pattes longitudinales (4) repliées vers l'intérieur.

16. Pochette selon l'une des revendications 1 à 14, **caractérisée en ce que** le tronçon formant poche (5) repose de façon lâche, dans l'état replié, sur les pattes longitudinales (4), et **en ce que** la patte de retenue (9) est réalisée à titre de moyen de retenue pour le tronçon formant poche (5), qui empêche après introduction dans la poche, un soulèvement du tronçon formant poche (5) depuis les pattes longitudinales (4).

17. Pochette selon l'une des revendications précédentes, **caractérisée en ce que** la largeur de chaque patte longitudinale (4) est de 10 à 50 % de la largeur de la pochette.
